# EUROPEAN PATENT SPECIFICATION

(11) **EP 3 687 006 B1**
(45) Date of publication and mention of the grant of the patent: **11.08.2021**
(21) Application number: 18922084.1
(22) Date of filing: 26.11.2018
(51) Int. Cl.: H01R 13/66, G06F 1/16, G06F 1/26, G06F 3/14, H02J 7/00, H01R 27/00

(54) **HUB WITH BUILT-IN MOBILE POWER SOURCE CIRCUIT**
HUB MIT EINGEBAUTEM MOBILEM STROMQUELLENKREIS
CONCENTRATEUR À CIRCUIT DE SOURCE D'ALIMENTATION MOBILE INTÉGRÉ

(43) Date of publication of application: 29.07.2020
(73) Proprietor: Guangdong Gopod Group Co., Ltd., Shenzhen, Guangdong 518000 (CN)
(72) Inventor: LIAO, Zhuowen, Shenzhen, Guangdong 518000 (CN)
(74) Representative: Ipside
(86) International application number: PCT/CN2018/117467
(87) International publication number: WO 2020/107163

(56) References cited:
- CN-A- 105 608 035
- CN-A- 108 365 469
- CN-A- 108 718 020
- CN-U- 205 986 205
- US-A1- 2013 057 068
- US-A1- 2017 005 494

## Description

### Technical Field

The present invention falls within the field of video signal conversion, and in particular to a hub in which a mobile power supply circuit is built.

### Background of the Invention

A conventional hub comprises a third connector connected to a power adapter and used to switch a third direct current power supply output by the power adapter, a power supply management module used to turn on or turn off the third direct current power supply according to a charging protocol, a second connector used to switch the third direct current power supply and a first video signal, a video signal conversion module used to generate a second video signal according to the first video signal, and a third connector used to switch the second video signal. Because a hub circuit can supply power only by means of the power adapter, there is a defect of poor convenience. In this regard, document US2017/005494 A1 gives an example of a hub comprising a power module integrating an energy storage element, the energy storage element being electrically connected with the power module, and wherein a third connector is electrically connected to an AC source the energy storage element is configured to be in a charging mode; and when the third connector is not electrically connected with the AC source, the energy storage element is configured to be in a power supply mode.

### Summary of the Invention

The present invention provides a hub in which a mobile power supply circuit is built, so as to solve the problems that traditional hubs in which a mobile power supply circuit is built have a low usage efficiency and poor convenience. The invention is set out in the independent claim 1. Additional embodiments are defined by the dependent claims 2-8.

### Brief description of the Drawings

In order to more clearly explain the technical invention in the embodiments of the present invention, the drawings used in the description of the embodiments will be briefly introduced below. Obviously, the drawings in the following description show merely some embodiments of the present invention, and those of ordinary skill in the art may still obtain other drawings according to the drawings without any creative effort.
FIG. 1 is a modular structure diagram of a hub in which a mobile power supply circuit is built, provided in an embodiment of the present invention;
FIG. 2 is a modular structure diagram of a power supply management module in the hub in which a mobile power supply circuit is built, provided in an embodiment of the present invention;
FIG. 3 is a modular structure diagram of a second direct current conversion module in the hub in which a mobile power supply circuit is built, provided in an embodiment of the present invention;
FIG. 4 is another modular structure diagram of the hub in which a mobile power supply circuit is built, provided in an embodiment of the present invention;
FIG. 5 is a modular structure diagram of a third direct current conversion module in the hub in which a mobile power supply circuit is built, provided in an embodiment of the present invention;
FIG. 6 is a modular structure diagram of a first direct current conversion module in the hub in which a mobile power supply circuit is built, provided in an embodiment of the present invention;
FIG. 7 is another modular structure diagram of the hub in which a mobile power supply circuit is built, provided in an embodiment of the present invention; and
FIG. 8 is an exemplary circuit structure diagram of the hub in which a mobile power supply circuit is built, provided in an embodiment of the present invention.

### Detailed Description of Embodiments

To make the objectives, technical solutions, and advantages of the present invention clearer, the embodiments of the present invention will be further described in detail below in conjunction with the accompanying drawings.

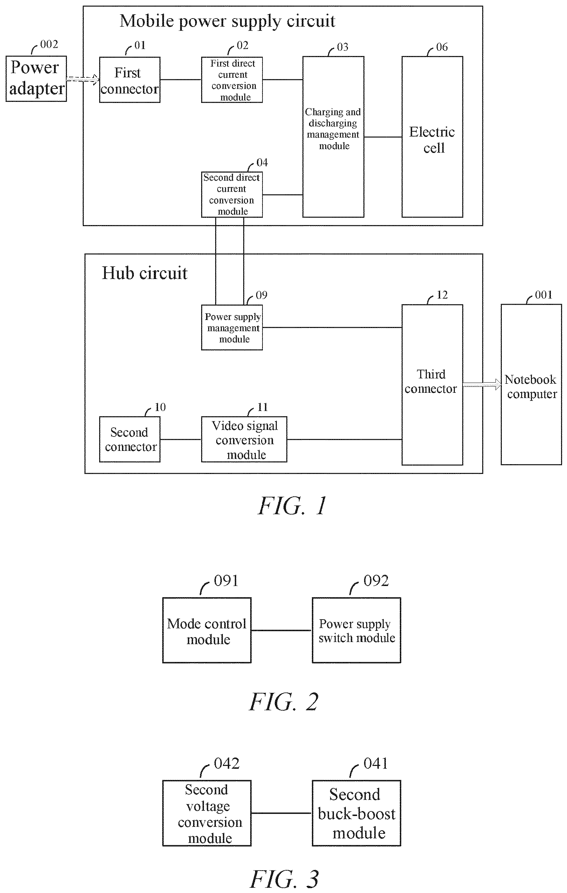

FIG. 1 shows a modular structure of a hub in which a mobile power supply circuit is built, provided in an embodiment of the present invention, and in order to facilitate illustration, only portions related to this embodiment of the present invention are shown, which is described in detail as follows:
the above-mentioned hub in which the mobile power supply circuit is built is connected to a notebook computer 001 and a power adapter 002, and comprises the mobile power supply circuit and a hub circuit.

The mobile power supply circuit comprises a first connector 01, a first direct current conversion module 02, a charging and discharging management module 03, a second direct current conversion module 04, and an electric core 06.

The first connector 01 is used to switch a first direct current power supply output by the power adapter or a first power supply; the first direct current conversion module 02 is connected to the first connector 01 and used to generate a second direct current power supply according to the first direct current power supply or generate the first power supply according to a second power supply; the charging and discharging management module 03 is connected to the first direct current conversion module 02 and used to turn on or turn off the second direct current power supply or the second power supply; the second direct current conversion module 04 is connected to the charging and discharging management module 03 and used to generate a fourth power supply and a secondary power supply according to a third power supply; the charging and discharging management module 03 is further used to generate the third power supply according to the second power supply; and the electric core 06 is connected to the charging and discharging management module 03 and used to store electric energy or output the second power supply according to the second direct current power supply.

The hub circuit comprises a power supply management module 09, a second connector 10, a video signal conversion module 11, and a third connector 12.

The power supply management module 09 is connected to the second direct current conversion module 04 and used to turn on or turn off the fourth power supply according to the secondary power supply and a charging protocol; the second connector 10 is connected to the power supply management module 09 and used to switch a first video signal; the video signal conversion module 11 is connected to the second connector 10 and used to generate the first video signal according to a second video signal; and the third connector 12 is connected to the video signal conversion module 11 and the notebook computer 001 and used to switch the second video signal and the fourth power supply.

In specific implementation, the first connector and the third connector 12 may be Type-C females. The electric core 06 may be a lithium electric core. The power adapter 002 may be a PD power adapter. The second connector 10 may be an HDMI connector.

As shown in FIG. 2, the power supply management module 09 comprises a mode control module 091 and a power supply switch module 092.

The mode control module 091 is connected to the second direct current conversion module 04 and the third connector 12 and used to perform charging protocol communication and output a switch signal according to the secondary power supply; and the power supply switch module 092 is connected to the second direct current conversion module 04, the mode control module 091, and the third connector 12 and used to turn on or turn off the fourth power supply according to the switch signal.

In specific implementation, the mode control module 091 is used to perform PD3.0 charging protocol communication and output a switch signal according to a third direct current power supply to implement PD power supply management.

As shown in FIG. 3, the second direct current conversion module 04 comprises a second buck-boost module 041 and a second voltage conversion module 042.

The second buck-boost module 041 is connected to the charging and discharging management module 03 and used to generate a fifth power supply according to the third power supply; and the second voltage conversion module 042 is connected to the second buck-boost module 041 and used to generate the fourth power supply for the fifth power supply.

In specific implementation, the second voltage conversion module may comprise a PD3.0 protocol chip, so as to convert the fifth power supply into a fourth power supply complying with a PD3.0 protocol.

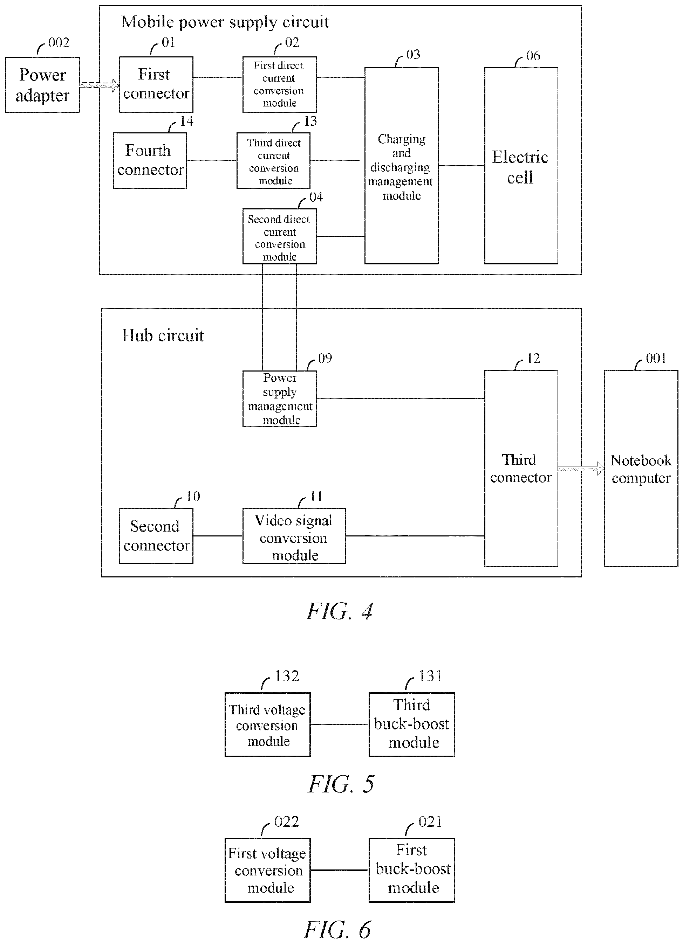

As shown in FIG. 4, the mobile power supply circuit further comprises a third direct current conversion module 13 and a fourth connector 14.

The third direct current conversion module 13 is connected to the charging and discharging management module 03 and used to generate a seventh power supply according to a sixth power supply; and the fourth connector 14 is connected to the third direct current conversion module 13 and switches the seventh power supply. The charging and discharging management module 03 is further used to generate the sixth power supply according to the second power supply.

The fourth connector 14 may be a USB female.

As shown in FIG. 5, the third direct current conversion module 13 comprises a third buck-boost module 131 and a third voltage conversion module 132.

The third buck-boost module 131 is connected to the charging and discharging management module 03 and used to generate an eighth power supply according to the sixth power supply; and the third voltage conversion module 132 is connected to the third buck-boost module 131 and used to generate the seventh power supply according to the eighth power supply.

In specific implementation, the third voltage conversion module may comprise a QC3.0 protocol chip, so as to convert the eighth power supply into a seventh power supply complying with a QC3.0 protocol.

As shown in FIG. 6, the first direct current conversion module 02 comprises a first buck-boost module 021 and a first voltage conversion module 022.

The first buck-boost module 021 is connected to the charging and discharging management module 03 and used to generate a ninth power supply according to the second power supply or generate the second direct current power supply according to a fourth direct current power supply; and the first voltage conversion module 022 is connected to the first buck-boost module 021 and used to generate the fourth direct current power supply according to the first direct current power supply or generate the first power supply according to the ninth power supply.

In specific implementation, the first voltage conversion module may comprise a PD3.0 protocol chip, so as to perform PD3.0 protocol conversion on the first direct current power supply and the ninth power supply.

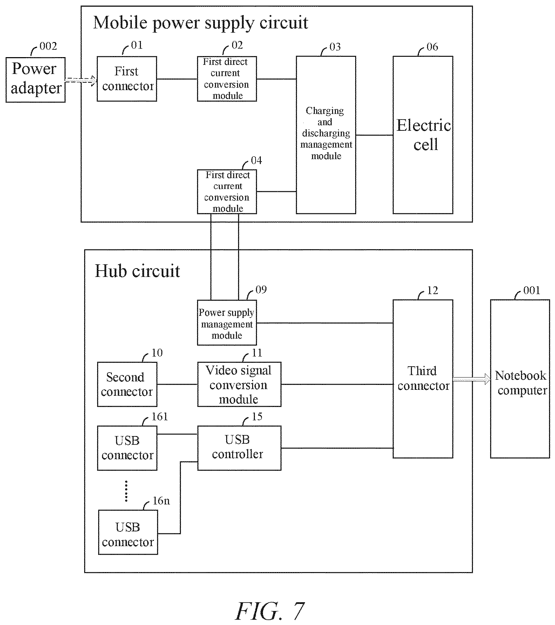

As shown in FIG. 7, the hub circuit further comprises a USB controller 15 and a plurality of USB connectors 16i.

The USB controller 15 is connected to the third connector 12 and used to generate a plurality of second USB signals according to a first USB signal or generate the first USB signal according to the plurality of second USB signals; the plurality of USB connectors 161 are connected to the USB controller 15 and used to switch the second USB signals; and the third connector 12 is further used to switch the first USB signal.

The hub circuit further comprises the USB controller 15 and the plurality of USB connectors 16i, so that the hub circuit may be externally connected to a plurality of USB devices to implement data communication between the USB devices and the notebook computer.

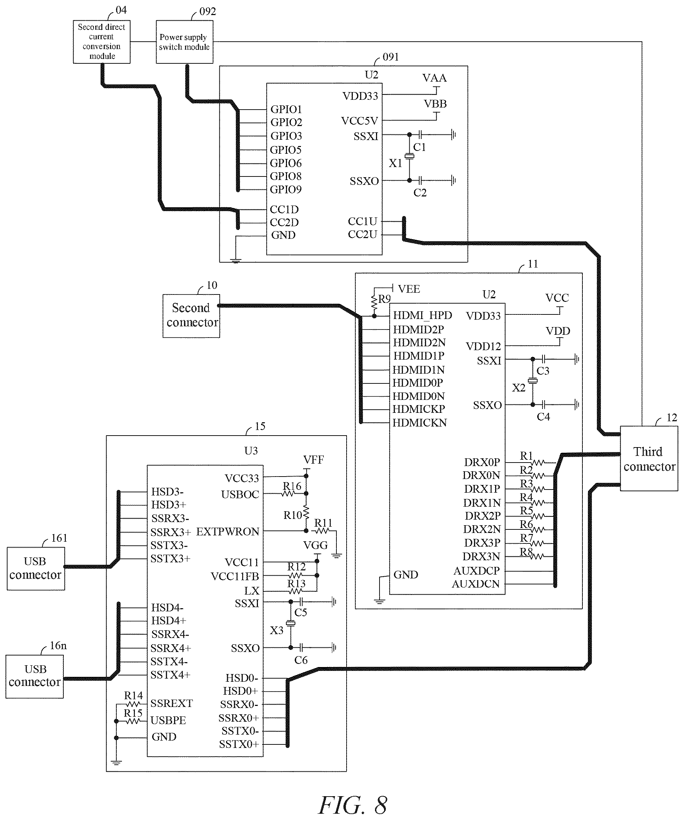

FIG. 8 shows an exemplary circuit structure of a hub in which a mobile power supply circuit is built, provided in an embodiment of the present invention, and in order to facilitate illustration, only portions related to this embodiment of the present invention are shown, which is described in detail as follows:
the mode control module 091 comprises a mode selection and power delivery (PD) power controller U1, a first crystal oscillator X1, a first capacitor C1, and a second capacitor C2.

A first power supply terminal VDD33 of the mode selection and PD power controller U1 is connected to a tenth power supply VAA; a second power supply terminal VDD5V of the mode selection and PD power controller U1 is connected to an eleventh power supply VBB; a crystal oscillator input terminal SSXI of the mode selection and PD power controller U1 is connected to a first terminal of the first crystal oscillator X1 and a first terminal of the first capacitor C1; a crystal oscillator output terminal SSXO of the mode selection and PD power controller U1 is connected to a second terminal of the first crystal oscillator X1 and a first terminal of the second capacitor C2; a first charging upstream facing port (UFP) configuration terminal CC1U of the mode selection and PD power controller U1 and a second charging UFP configuration terminal CC2U of the mode selection and PD power controller U1 jointly constitute an upstream facing port configuration terminal of the mode control module 091; a first charging dual role port (DRP) configuration terminal CC1D of the mode selection and PD power controller U1 and a second charging DRP configuration terminal CC2D of the mode selection and PD power controller U1 jointly constitute a dual role port configuration terminal of the mode control module 091; a first universal input/output terminal GPIO1 of the mode selection and PD power controller U1, a second universal input/output terminal GPIO2 of the mode selection and PD power controller U1, a third universal input/output terminal GPIO3 of the mode selection and PD power controller U1, a fourth universal input/output terminal GPIO5 of the mode selection and PD power controller U1, a fifth universal input/output terminal GPIO6 of the mode selection and PD power controller U1, a sixth universal input/output terminal GPIO8 of the mode selection and PD power controller U1, and a seventh universal input/output terminal GPIO9 of the mode selection and PD power controller U1 jointly constitute a switch signal output terminal of the mode control module 091; and a ground terminal GND of the mode selection and PD power controller U1, a second terminal of the first capacitor C1, and a second terminal of the second capacitor C2 are jointly connected to a power ground.

The video signal conversion module 11 comprises a display port (DP) to high definition multimedia interface (HDMI) conversion chip U2, a second crystal oscillator X2, a third capacitor C3, a fourth capacitor C4, a first resistor R1, a second resistor R2, a third resistor R3, a fourth resistor R4, a fifth resistor R5, a sixth resistor R6, a seventh resistor R7, an eighth resistor R8, and a ninth resistor R9.

A first power supply terminal VDD33 of the DP to HDMI conversion chip U2 is connected to a twelfth power supply VCC; a second power supply terminal VDD12 of the DP to HDMI conversion chip U2 is connected to a thirteenth power supply VDD; a crystal oscillator input terminal SSXI of the DP to HDMI conversion chip U2 is connected to a first terminal of the second crystal oscillator X2 and a first terminal of the third capacitor C3; a crystal oscillator output terminal SSXO of the DP to HDMI conversion chip U2 is connected to a second terminal of the second crystal oscillator X2 and a first terminal of the fourth capacitor C4; a first positive electrode DP signal DRX0P of the DP to HDMI conversion chip U2 is connected to a first terminal of the first resistor R1; a first negative electrode DP signal DRX0N of the DP to HDMI conversion chip U2 is connected to a first terminal of the second resistor R2; a second positive electrode DP signal DRX1P of the DP to HDMI conversion chip U2 is connected to a first terminal of the third resistor R3; a second negative electrode DP signal DRX1N of the DP to HDMI conversion chip U2 is connected to a first terminal of the fourth resistor R4; a third positive electrode DP signal DRX2P of the DP to HDMI conversion chip U2 is connected to a first terminal of the fifth resistor R5; a third negative electrode DP signal DRX2N of the DP to HDMI conversion chip U2 is connected to a first terminal of the sixth resistor R6; a fourth positive electrode DP signal DRX3P of the DP to HDMI conversion chip U2 is connected to a first terminal of the seventh resistor R7; a fourth negative electrode DP signal DRX3N of the DP to HDMI conversion chip U2 is connected to a first terminal of the eighth resistor R8; a first positive electrode secondary video signal terminal AUXDCP of the DP to HDMI conversion chip U2, a first negative electrode secondary video signal terminal AUXDCN of the DP to HDMI conversion chip U2, a second terminal of the first resistor R1, a second terminal of the second resistor R2, a second terminal of the third resistor R3, a second terminal of the fourth resistor R4, a second terminal of the fifth resistor R5, a second terminal of the sixth resistor R6, a second terminal of the seventh resistor R7, and a second terminal of the eighth resistor R8 jointly constitute a DP signal terminal of the video signal conversion module 11; an HDMI hot plug detection terminal HDMI_HPD of the DP to HDMI conversion chip U2, a first positive electrode HDMI signal terminal HDMID0P of the DP to HDMI conversion chip U2, a first negative electrode HDMI signal terminal HDMID0N of the DP to HDMI conversion chip U2, a second positive electrode HDMI signal terminal HDMID1P of the DP to HDMI conversion chip U2, a second negative electrode HDMI signal terminal HDMID1N of the DP to HDMI conversion chip U2, a third positive electrode HDMI signal terminal HDMID2P of the DP to HDMI conversion chip U2, a third negative electrode HDMI signal terminal HDMID2N of the DP to HDMI conversion chip U2, a positive electrode HDMI clock signal terminal HDMICKP of the DP to HDMI conversion chip U2, a negative electrode HDMI clock signal terminal HDMICKN of the DP to HDMI conversion chip U2, and a first terminal of the ninth resistor R9 jointly constitute an HDMI signal terminal of the video signal conversion module 11; a second terminal of the ninth resistor R9 is connected to a fifth power supply VEE; and a ground terminal GND of the DP to HDMI conversion chip U2 is connected to the power ground.

The USB controller 15 comprises a USB hub controller U3, a third crystal oscillator X3, a fifth capacitor C5, a sixth capacitor C6, s tenth resistor R10, an eleventh resistor R11, a twelfth resistor R12, a thirteenth resistor R13, a fourteenth resistor R14, a fifteenth resistor R15, and a sixteenth resistor R16.

A first power supply terminal VCC33 of the USB hub controller U3, a first terminal of the tenth resistor R10, and a first terminal of the sixteenth resistor R16 are jointly connected to a sixth power supply VFF; a second terminal of the sixteenth resistor R16 is connected to a power supply detection terminal USBOC of the USB hub controller U3; a second terminal of the tenth resistor R10 is connected to a first terminal of the eleventh resistor R11 and an external power supply state terminal EXTPWRON of the USB hub controller U3; a second power supply terminal VCC11 of the USB hub controller U3, a first terminal of the twelfth resistor R12, and a first terminal of the thirteenth resistor R13 are jointly connected to a seventh power supply VGG; the first terminal of the twelfth resistor R12 is connected to a power supply feedback terminal VCC11FB of the USB hub controller U3; the first terminal of the thirteenth resistor R13 is connected to a power supply adjustment terminal LX of the USB hub controller U3; a crystal oscillator input terminal SSXI of the USB hub controller U3 is connected to a first terminal of the third crystal oscillator X3 and a first terminal of the fifth capacitor C5; a crystal oscillator output terminal SSXO of the USB hub controller U3 is connected to a second terminal of the third crystal oscillator X3 and a first terminal of the sixth capacitor C5; a USB2.0 UFP positive electrode signal terminal HSD0+ of the USB hub controller U3, a USB2.0 UFP negative electrode signal terminal HSD0- of the USB hub controller U3, a USB3.1 UFP positive electrode signal receiving terminal SSRX0+ of the USB hub controller U3, a USB3.1 UFP negative electrode signal receiving terminal SSRX0- of the USB hub controller U3, a USB3.1 UFP positive electrode signal transmitting terminal SSTX0+ of the USB hub controller U3, and a USB3.1 UFP negative electrode signal transmitting terminal SSTX0- of the USB hub controller U3 jointly constitute an upstream facing signal terminal of the USB controller 15; a first USB2.0 downstream facing port (DFP) positive electrode signal terminal HSD3+ of the USB hub controller U3, a first USB2.0 DFP negative electrode signal terminal HSD3- of the USB hub controller U3, a first USB3.1 DFP positive electrode signal receiving terminal SSRX3+ of the USB hub controller U3, a first USB3.1 DFP negative electrode signal receiving terminal SSRX3-of the USB hub controller U3, a first USB3.1 DFP positive electrode signal transmitting terminal SSTX3+ of the USB hub controller U3, and a first USB3.1 DFP negative electrode signal transmitting terminal SSTX3- of the USB hub controller U3 jointly constitute a first downstream facing signal terminal of the USB controller 15; a second USB2.0 downstream facing port (DFP) positive electrode signal terminal HSD3+ of the USB hub controller U3, a second USB2.0 DFP negative electrode signal terminal HSD3- of the USB hub controller U3, a second USB3.1 DFP positive electrode signal receiving terminal SSRX3+ of the USB hub controller U3, a second USB3.1 DFP negative electrode signal receiving terminal SSRX3- of the USB hub controller U3, a second USB3.1 DFP positive electrode signal transmitting terminal SSTX3+ of the USB hub controller U3, and a second USB3.1 DFP negative electrode signal transmitting terminal SSTX3-of the USB hub controller U3 jointly constitute a second downstream facing signal terminal of the USB controller 15; a power supply enable terminal USBPE of the USB hub controller U3 is connected to a first terminal of the fifteenth resistor R15; an external resistor SSREXT of the USB hub controller U3 is connected to a first terminal of the fourteenth resistor R14; and a second terminal of the fifth capacitor C5, a second terminal of the sixth capacitor C6, a second terminal of the fourteenth resistor R14, a second terminal of the fifteenth resistor R15, and a ground terminal GND of the USB hub controller U3 are jointly connected to a power ground.

Because the USB controller 15 is a USB3.1 controller and supports a USB3.0 protocol and a USB2.0 protocol, the data transmission rate is enhanced.

What is shown in FIG. 8 will be further described below with reference to a working principle.

In a specific implementation process,
the second direct current conversion module 04 in the mobile power supply circuit outputs the fourth power supply; the first charging UFP configuration terminal CC1U of the mode selection and PD power controller U1 and the second charging UFP configuration terminal CC2U of the mode selection and PD power controller U1 perform charging protocol communication with the notebook computer 001 by means of the third connector 12; the first charging DRP configuration terminal CC1D of the mode selection and PD power controller U1 and the second charging DRP configuration terminal CC2D of the mode selection and PD power controller U1 perform charging protocol communication with the second direct current conversion module 04 in the mobile power supply circuit; and the mode selection and PD power controller U1 outputs a switch signal according to a result of the charging protocol communication, so that the power supply switch module 092 turns on or turns off the fourth power supply according to the switch signal.

The third connector 12 switches the fourth power supply.

The third connector 12 switches a first video signal; a first positive electrode DP signal DRX0P of the DP to HDMI conversion chip U2, a first negative electrode DP signal DRX0N of the DP to HDMI conversion chip U2, a second positive electrode DP signal DRX1 P of the DP to HDMI conversion chip U2, a second negative electrode DP signal DRX1N of the DP to HDMI conversion chip U2, a third positive electrode DP signal DRX2P of the DP to HDMI conversion chip U2, a third negative electrode DP signal DRX2N of the DP to HDMI conversion chip U2, a fourth positive electrode DP signal DRX3P of the DP to HDMI conversion chip U2, a fourth negative electrode DP signal DRX3N of the DP to HDMI conversion chip U2, a first positive electrode secondary video signal terminal AUXDCP of the DP to HDMI conversion chip U2, and a first negative electrode secondary video signal terminal AUXDCN of the DP to HDMI conversion chip U2 accept a second video signal; the DP to HDMI conversion chip U2 generates the first video signal according to the second video signal, and the first video signal is sent to the second connector 10 by means of an HDMI signal terminal of the video signal conversion module 11; and the second connector 10 switches the first video signal.

The plurality of USB connectors 161 switch second USB signals; and the third connector 12 further switches a first USB signal. The upstream facing signal terminal of the USB controller 15 receives or sends a first USB signal; the first downstream facing signal terminal of the USB controller 15 and the second downstream facing signal terminal of the USB controller 15 receive or send a second USB signal; and the USB controller 15 and the USB hub controller U3 generate a plurality of second USB signals according to the first USB signal or generate the first USB signal according to the plurality of second USB signals.

In the embodiments of the present invention, a mobile power supply circuit and a hub circuit are comprised, wherein the mobile power supply circuit comprises a first connector, a first direct current conversion module, a charging and discharging management module, a second direct current conversion module, and an electric core; and wherein the hub circuit comprises a power supply management module, a second connector, a video signal conversion module, and a third connector. Because the hub circuit is provided with the mobile power supply circuit, power is supplied by means of the mobile power supply circuit when the hub is not connected to a power adapter, thereby improving the convenience of the hub circuit.

The above-mentioned descriptions are merely preferred embodiments of the present invention but not intended to limit the present invention, and any modifications, equivalent replacements, improvements, etc. made within the scope of the appended claims should be included within the scope of protection of the present solution.

## Claims

1. A hub in which a mobile power supply circuit is built, the hub being connected to a notebook computer (001) and a power adapter (002), and wherein the hub in which the mobile power supply circuit is built comprises the mobile power supply circuit and a hub circuit,
wherein the mobile power supply circuit comprises:
a first connector (01) used to switch a first direct current power supply output by the power adapter (002) or a first power supply;
a first direct current conversion module (02) connected to the first connector (01) and used to generate a second direct current power supply according to the first direct current power supply or generate the first power supply according to a second power supply;
a charging and second direct current conversion module (04) management module (03) connected to the first direct current conversion module (02) and used to turn on or turn off the second direct current power supply or the second power supply;
a second direct current conversion module (04) connected to the charging and discharging management module (03) and used to generate a fourth power supply and a secondary power supply according to a third power supply,
wherein the charging and discharging management module (03) is further used to generate the third power supply according to the second power supply; and
an electric core (06) connected to the charging and discharging management module (03) and used to store electric energy or output the second power supply according to the second direct current power supply;
and wherein the hub circuit comprises:
a power supply management module (09) connected to the second direct current conversion module (04) and used to turn on or turn off the fourth power supply according to the secondary power supply and a charging protocol;
a second connector (10) connected to the power supply management module (09) and used to switch a first video signal;
a video signal conversion module (11) connected to the second connector (10) and used to generate the first video signal according to a second video signal; and
a third connector (12) connected to the video signal conversion module (11) and the notebook computer (001) and used to switch the second video signal and the fourth power supply, and wherein the power supply management module (09) comprises:
a mode control module (091) connected to the second direct current conversion module (04) and the third connector (12) and used to perform charging protocol communication and output a switch signal according to the secondary power supply; and
a power supply switch module (092) connected to the second direct current conversion module (04), the mode control module (091), and the third connector (12) and used to turn on or turn off the fourth power supply according to the switch signal and
**characterized in that** the mode control module (091) comprises a mode selection and PD power controller, a first crystal oscillator, a first capacitor, and a second capacitor,
wherein a first power supply terminal of the mode selection and PD power controller is connected to a tenth power supply; a second power supply terminal of the mode selection and PD power controller is connected to an eleventh power supply; a crystal oscillator input terminal of the mode selection and PD power controller is connected to a first terminal of the first crystal oscillator and a first terminal of the first capacitor; a crystal oscillator output terminal of the mode selection and PD power controller is connected to a second terminal of the first crystal oscillator and a first terminal of the second capacitor; a first charging UFP configuration terminal of the mode selection and PD power controller and a second charging UFP configuration terminal of the mode selection and PD power controller jointly constitute an upstream facing port configuration terminal of the mode control module (091); a first charging DRP configuration terminal of the mode selection and PD power controller and a second charging DRP configuration terminal of the mode selection and PD power controller jointly constitute a dual role port configuration terminal of the mode control module (091); a first universal input/output terminal of the mode selection and PD power controller, a second universal input/output terminal of the mode selection and PD power controller, a third universal input/output terminal of the mode selection and PD power controller, a fourth universal input/output terminal of the mode selection and PD power controller, a fifth universal input/output terminal of the mode selection and PD power controller, a sixth universal input/output terminal of the mode selection and PD power controller, and a seventh universal input/output terminal of the mode selection and PD power controller jointly constitute a switch signal output terminal of the mode control module (091); and a ground terminal of the mode selection and PD power controller, a second terminal of the first capacitor, and a second terminal of the second capacitor are jointly connected to a power ground.

2. The hub in which the mobile power supply circuit is built of claim 1, **characterized in that** the second direct current conversion module (04) comprises:
a second buck-boost module (041) connected to the charging and discharging management module (03) and used to generate a fifth power supply based on the third power supply; and
a second voltage conversion module (042) connected to the second buck-boost module and used to generate the fourth power supply for the fifth power supply.

3. The hub in which the mobile power supply circuit is built of claim 1, **characterized in that** the mobile power supply circuit further comprises:
a third direct current conversion module (13) connected to the charging and discharging management module (03) and used to generate a seventh power supply based on the sixth power supply; and
a fourth connector (14) connected to the third direct current conversion module (13) and switching the seventh power supply,
wherein the charging and discharging management module (03) is further used to generate the sixth power supply based on the second power supply.

4. The hub in which the mobile power supply circuit is built of claim 5, **characterized in that** the third direct current conversion module (13) comprises:
a third buck-boost module (131) connected to the charging and discharging management module (03) and used to generate an eighth power supply based on the sixth power supply; and
a third voltage conversion module (132) connected to the third buck-boost module (131) and used to generate the seventh power supply based on the eighth power supply.

5. The hub in which the mobile power supply circuit is built of claim 1, **characterized in that** the first direct current conversion module (02) comprises:
a first buck-boost module (021) connected to the charging and discharging management module (03) and used to generate a ninth power supply based on the second power supply or generate the second direct current power supply based on a fourth direct current power supply; and
a first voltage conversion module (022) connected to the first buck-boost module (021) and used to generate the fourth direct current power supply based on the first direct current power supply or generate the first power supply based on the ninth power supply.

6. The hub in which the mobile power supply circuit is built of claim 1, **characterized in that** the video signal conversion module (02) comprises a DP to HDMI conversion chip, a second crystal oscillator, a third capacitor, a fourth capacitor, a first resistor, a second resistor, a third resistor, a fourth resistor, a fifth resistor, a sixth resistor, a seventh resistor, an eighth resistor, and a ninth resistor, wherein a first power supply terminal of the DP to HDMI conversion chip is connected to a twelfth power supply; a second power supply terminal of the DP to HDMI conversion chip is connected to a thirteenth power supply; a crystal oscillator input terminal of the DP to HDMI conversion chip is connected to a first terminal of the second crystal oscillator and a first terminal of the third capacitor; a crystal oscillator output terminal of the DP to HDMI conversion chip is connected to a second terminal of the second crystal oscillator and a first terminal of the fourth capacitor; a first positive electrode DP signal of the DP to HDMI conversion chip is connected to a first terminal of the first resistor; a first negative electrode DP signal of the DP to HDMI conversion chip is connected to a first terminal of the second resistor; a second positive electrode DP signal of the DP to HDMI conversion chip is connected to a first terminal of the third resistor; a second negative electrode DP signal of the DP to HDMI conversion chip is connected to a first terminal of the fourth resistor; a third positive electrode DP signal of the DP to HDMI conversion chip is connected to a first terminal of the fifth resistor; a third negative electrode DP signal of the DP to HDMI conversion chip is connected to a first terminal of the sixth resistor; a fourth positive electrode DP signal of the DP to HDMI conversion chip is connected to a first terminal of the seventh resistor; a fourth negative electrode DP signal of the DP to HDMI conversion chip is connected to a first terminal of the eighth resistor; a first positive electrode secondary video signal terminal of the DP to HDMI conversion chip, a first negative electrode secondary video signal terminal of the DP to HDMI conversion chip, a second terminal of the first resistor, a second terminal of the second resistor, a second terminal of the third resistor, a second terminal of the fourth resistor, a second terminal of the fifth resistor, a second terminal of the sixth resistor, a second terminal of the seventh resistor, and a second terminal of the eighth resistor jointly constitute a DP signal terminal of the video signal conversion module (02); an HDMI hot plug detection terminal of the DP to HDMI conversion chip, a first positive electrode HDMI signal terminal of the DP to HDMI conversion chip, a first negative electrode HDMI signal terminal of the DP to HDMI conversion chip, a second positive electrode HDMI signal terminal of the DP to HDMI conversion chip, a second negative electrode HDMI signal terminal of the DP to HDMI conversion chip, a third positive electrode HDMI signal terminal of the DP to HDMI conversion chip, a third negative electrode HDMI signal terminal of the DP to HDMI conversion chip, a positive electrode HDMI clock signal terminal of the DP to HDMI conversion chip, a negative electrode HDMI clock signal terminal of the DP to HDMI conversion chip, and a first terminal of the ninth resistor jointly constitute an HDMI signal terminal of the video signal conversion module (02); a second terminal of the ninth resistor is connected to a fifth power supply; and a ground terminal of the DP to HDMI conversion chip is connected to the power ground.

7. The hub in which the mobile power supply circuit is built of claim 1, **characterized in that** the hub circuit further comprises:
a USB controller (15) connected to the third connector (12) and used to generate a plurality of second USB signals based on a first USB signal or generate the first USB signal based on the plurality of second USB signals; and
a plurality of USB connectors (161) connected to the USB controller (15) and used to switch the second USB signals,
wherein the third connector (12) is further used to switch the first USB signal.

8. The hub in which the mobile power supply circuit is built of claim 7, **characterized in that** the USB controller (15) comprises a USB hub controller, a third crystal oscillator, a fifth capacitor, a sixth capacitor, a tenth resistor, an eleventh resistor, a twelfth resistor, a thirteenth resistor, a fourteenth resistor, a fifteenth resistor, and a sixteenth resistor,
wherein a first power supply terminal VCC33 of the USB hub controller, a first terminal of the tenth resistor, and a first terminal of the sixteenth resistor are jointly connected to a sixth power supply; a second terminal of the sixteenth resistor is connected to a power supply detection terminal of the USB hub controller; a second terminal of the tenth resistor is connected to a first terminal of the eleventh resistor and an external power supply state terminal of the USB hub controller; a second power supply terminal of the USB hub controller (15), a first terminal of the twelfth resistor, and a first terminal of the thirteenth resistor are jointly connected to a seventh power supply; the first terminal of the twelfth resistor is connected to a power supply feedback terminal of the USB hub controller (15); the first terminal of the thirteenth resistor is connected to a power supply adjustment terminal of the USB hub controller; a crystal oscillator input terminal of the USB hub controller is connected to a first terminal of the third crystal oscillator and a first terminal of the fifth capacitor; a crystal oscillator output terminal of the USB hub controller is connected to a second terminal of the third crystal oscillator and a first terminal of the sixth capacitor; a USB2.0 UFP positive electrode signal terminal of the USB hub controller, a USB2.0 UFP negative electrode signal terminal of the USB hub controller, a USB3.1 UFP positive electrode signal receiving terminal of the USB hub controller, a USB3.1 UFP negative electrode signal receiving terminal of the USB hub controller, a USB3.1 UFP positive electrode signal transmitting terminal of the USB hub controller, and a USB3.1 UFP negative electrode signal transmitting terminal of the USB hub controller jointly constitute an upstream facing signal terminal of the USB controller; a first USB2.0 DFP positive electrode signal terminal of the USB hub controller, a first USB2.0 DFP negative electrode signal terminal of the USB hub controller, a first USB3.1 DFP positive electrode signal receiving terminal of the USB hub controller, a first USB3.1 DFP negative electrode signal receiving terminal of the USB hub controller, a first USB3.1 DFP positive electrode signal transmitting terminal of the USB hub controller, and a first USB3.1 DFP negative electrode signal transmitting terminal of the USB hub controller jointly constitute a first downstream facing signal terminal of the USB controller; a second USB2.0 DFP positive electrode signal terminal of the USB hub controller, a second USB2.0 DFP negative electrode signal terminal of the USB hub controller, a second USB3.1 DFP positive electrode signal receiving terminal of the USB hub controller, a second USB3.1 DFP negative electrode signal receiving terminal of the USB hub controller, a second USB3.1 DFP positive electrode signal transmitting terminal of the USB hub controller, and a second USB3.1 DFP negative electrode signal transmitting terminal of the USB hub controller jointly constitute a second downstream facing signal terminal of the USB controller; a power supply enable terminal of the USB hub controller is connected to a first terminal of the fifteenth resistor; an external resistor of the USB hub controller is connected to a first terminal of the fourteenth resistor; a second terminal of the fifth capacitor, a second terminal of the sixth capacitor, a second terminal of the fourteenth resistor, a second terminal of the fifteenth resistor, and a ground terminal of the USB hub controller are jointly connected to a power ground.

## Patentansprüche

1. Hub, in den eine mobile Leistungsversorgungsschaltung eingebaut ist, wobei der Hub mit einem Notebook-Computer (001) und einem Leistungsadapter (002) verbunden ist, und wobei der Hub, in den die mobile Leistungsversorgungsschaltung eingebaut ist, die mobile Leistungsversorgungsschaltung und eine Hub-Schaltung umfasst,
wobei die mobile Leistungsversorgungsschaltung umfasst:
einen ersten Verbinder (01), der verwendet wird, um eine erste Gleichstrom-Leistungsversorgung, die vom Leistungsadapter (002) ausgegeben wird, oder eine erste Leistungsversorgung zu schalten;
ein erstes Gleichstrom-Umwandlungsmodul (02), das mit dem ersten Verbinder (01) verbunden ist und verwendet wird, um eine zweite Gleichstrom-Leistungsversorgung gemäß der ersten Gleichstrom-Leistungsversorgung zu erzeugen, oder die erste Leistungsversorgung gemäß einer zweiten Leistungsversorgung zu erzeugen;
ein Lade- und zweites Gleichstrom-Umwandlungsmodul- (04) Verwaltungsmodul (03), das mit dem ersten Gleichstrom-Umwandlungsmodul (02) verbunden ist und verwendet wird, um die zweite Gleichstrom-Leistungsversorgung oder die zweite Leistungsversorgung einzuschalten oder auszuschalten;
ein zweites Gleichstrom-Umwandlungsmodul (04), das mit dem Lade- und Entlade-Verwaltungsmodul (03) verbunden ist und verwendet wird, um eine vierte Leistungsversorgung und eine sekundäre Leistungsversorgung gemäß einer dritten Leistungsversorgung zu erzeugen,
wobei das Lade- und Entlade-Verwaltungsmodul (03) weiter verwendet wird, um die dritte Leistungsversorgung gemäß der zweiten Leistungsversorgung zu erzeugen; und
einen elektrischen Kern (06), der mit dem Lade- und Entlade-Verwaltungsmodul (03) verbunden ist und verwendet wird, um elektrische Energie zu speichern oder die zweite Leistungsversorgung gemäß der zweiten Gleichstrom-Leistungsversorgung auszugeben;
und wobei die Hub-Schaltung umfasst:
ein Leistungsversorgungs-Verwaltungsmodul (09), das mit dem zweiten Gleichstrom-Umwandlungsmodul (04) verbunden ist und verwendet wird, um die vierte Leistungsversorgung gemäß der sekundären Leistungsversorgung und einem Ladeprotokoll einzuschalten oder auszuschalten;
einen zweiten Verbinder (10), der mit dem Leistungsversorgungs-Verwaltungsmodul (09) verbunden ist und verwendet wird, um ein erstes Videosignal zu schalten; ein Videosignal-Umwandlungsmodul (11), das mit dem zweiten Verbinder (10) verbunden ist und verwendet wird, um das erste Videosignal gemäß einem zweiten Videosignal zu erzeugen; und
einen dritten Verbinder (12), der mit dem Videosignal-Umwandlungsmodul (11) und dem Notebook-Computer (001) verbunden ist und verwendet wird, um das zweite Videosignal und die vierte Leistungsversorgung zu schalten, und wobei das Leistungsversorgungs-Verwaltungsmodul (09) umfasst:
ein Modussteuermodul (091), das mit dem zweiten Gleichstrom-Umwandlungsmodul (04) und dem dritten Verbinder (12) verbunden ist und verwendet wird, um Ladeprotokollkommunikation durchzuführen und ein Schaltsignal gemäß der sekundären Leistungsversorgung auszugeben; und
ein Leistungsversorgungs-Schaltmodul (092), das mit dem zweiten Gleichstrom-Umwandlungsmodul (04), dem Modussteuermodul (091) und dem dritten Verbinder (12) verbunden ist und verwendet wird, um die vierte Leistungsversorgung gemäß dem Schaltsignal einzuschalten oder auszuschalten, und
**dadurch gekennzeichnet, dass** das Modussteuermodul (091) eine Moduswahl- und PD-Leistungssteuerung, einen ersten Quarzoszillator, einen ersten Kondensator, und einen zweiten Kondensator umfasst,
wobei ein erster Leistungsversorgungsanschluss der Moduswahl- und PD-Leistungssteuerung mit einer zehnten Leistungsversorgung verbunden ist; ein zweiter Leistungsversorgungsanschluss der Moduswahl- und PD-Leistungssteuerung mit einer elften Leistungsversorgung verbunden ist; ein Quarzoszillator-Eingangsanschluss der Moduswahl- und PD-Leistungssteuerung mit einem ersten Anschluss des ersten Quarzoszillators und einem ersten Anschluss des ersten Kondensators verbunden ist; ein Quarzoszillator-Ausgangsanschluss der Moduswahl- und PD-Leistungssteuerung mit einem zweiten Anschluss des ersten Quarzoszillators und einem ersten Anschluss des zweiten Kondensators verbunden ist; ein erster Lade-UFP-Konfigurationsanschluss der Moduswahl- und PD-Leistungssteuerung und ein zweiter Lade-UFP-Konfigurationsanschluss der Moduswahl- und PD-Leistungssteuerung gemeinsam einen Upstream Facing Port-Konfigurationsanschluss des Modussteuermoduls (091) bilden; ein erster Lade-DRP-Konfigurationsanschluss der Moduswahl-und PD-Leistungssteuerung und ein zweiter Lade-DRP-Konfigurationsanschluss der Moduswahl- und PD-Leistungssteuerung gemeinsam einen Dual Role Port-Konfigurationsanschluss des Modussteuermoduls (091) bilden;
ein erster Universal-Eingangs/Ausgangs-Anschluss der Moduswahl- und PD-Leistungssteuerung, ein zweiter Universal-Eingangs/Ausgangs-Anschluss der Moduswahl- und PD-Leistungssteuerung, ein dritter Universal-Eingangs/Ausgangs-Anschluss der Moduswahl- und PD-Leistungssteuerung, ein vierter Universal-Eingangs/Ausgangs-Anschluss der Moduswahl- und PD-Leistungssteuerung, ein fünfter Universal-Eingangs/Ausgangs-Anschluss der Moduswahl- und PD-Leistungssteuerung, ein sechster Universal-Eingangs/Ausgangs-Anschluss der Moduswahl- und PD-Leistungssteuerung, und ein siebter Universal-Eingangs/Ausgangs-Anschluss der Moduswahl- und PD-Leistungssteuerung gemeinsam einen Schaltsignal-Ausgangsanschluss des Modussteuermoduls (091) bilden; und ein Masseanschluss der Moduswahl- und PD-Leistungssteuerung, ein zweiter Anschluss des ersten Kondensators, und ein zweiter Anschluss des zweiten Kondensators gemeinsam mit einer Leistungsmasse verbunden sind.

2. Hub, in den die mobile Leistungsversorgungsschaltung eingebaut ist, nach Anspruch 1, **dadurch gekennzeichnet, dass** das zweite Gleichstrom-Umwandlungsmodul (04) umfasst:
ein zweites Buck-Boost-Modul (041), das mit dem Lade- und Entlade-Verwaltungsmodul (03) verbunden ist und verwendet wird, um eine fünfte Leistungsversorgung auf Basis der dritten Leistungsversorgung zu erzeugen; und
ein zweites Spannungsumwandlungsmodul (042), das mit dem zweiten Buck-Boost-Modul verbunden ist und verwendet wird, um die vierte Leistungsversorgung für die fünfte Leistungsversorgung zu erzeugen.

3. Hub, in den die mobile Leistungsversorgungsschaltung eingebaut ist, nach Anspruch 1, **dadurch gekennzeichnet, dass** die mobile Leistungsversorgungsschaltung weiter umfasst:
ein drittes Gleichstrom-Umwandlungsmodul (13), das mit dem Lade- und Entlade-Verwaltungsmodul (03) verbunden ist und verwendet wird, um eine siebte Leistungsversorgung auf Basis der sechsten Leistungsversorgung zu erzeugen; und
einen vierten Verbinder (14), der mit dem dritten Gleichstrom-Umwandlungsmodul (13) verbunden ist und die siebte Leistungsversorgung schaltet,
wobei das Lade- und Entlade-Verwaltungsmodul (03) weiter verwendet wird, um die sechste Leistungsversorgung auf Basis der zweiten Leistungsversorgung zu erzeugen.

4. Hub, in den die mobile Leistungsversorgungsschaltung eingebaut ist, nach Anspruch 5, **dadurch gekennzeichnet, dass** das dritte Gleichstrom-Umwandlungsmodul (13) umfasst:
ein drittes Buck-Boost-Modul (131), das mit dem Lade- und Entlade-Verwaltungsmodul (03) verbunden ist und verwendet wird, um eine achte Leistungsversorgung auf Basis der sechsten Leistungsversorgung zu erzeugen; und
ein drittes Spannungsumwandlungsmodul (132), das mit dem dritten Buck-Boost-Modul (131) verbunden ist und verwendet wird, um die siebte Leistungsversorgung auf Basis der achten Leistungsversorgung zu erzeugen.

5. Hub, in den die mobile Leistungsversorgungsschaltung eingebaut ist, nach Anspruch 1, **dadurch gekennzeichnet, dass** das erste Gleichstrom-Umwandlungsmodul (02) umfasst:
ein erstes Buck-Boost-Modul (021), das mit dem Lade- und Entlade-Verwaltungsmodul (03) verbunden ist und verwendet wird, um eine neunte Leistungsversorgung auf Basis der zweiten Leistungsversorgung zu erzeugen, oder die zweite Gleichstrom-Leistungsversorgung auf Basis einer vierten Gleichstrom-Leistungsversorgung zu erzeugen; und
ein erstes Spannungsumwandlungsmodul (022), das mit dem ersten Buck-Boost-Modul (021) verbunden ist und verwendet wird, um die vierte Gleichstrom-Leistungsversorgung auf Basis der ersten Gleichstrom-Leistungsversorgung zu erzeugen, oder die erste Leistungsversorgung auf Basis der neunten Leistungsversorgung zu erzeugen.

6. Hub, in den die mobile Leistungsversorgungsschaltung eingebaut ist, nach Anspruch 1, **dadurch gekennzeichnet, dass** das Videosignal-Umwandlungsmodul (02) einen DP-auf-HDMI-Umwandlungschip, einen zweiten Quarzoszillator, einen dritten Kondensator, einen vierten Kondensator, einen ersten Widerstand, einen zweiten Widerstand, einen dritten Widerstand, einen vierten Widerstand, einen fünften Widerstand, einen sechsten Widerstand, einen siebten Widerstand, einen achten Widerstand, und einen neunten Widerstand umfasst,
wobei ein erster Leistungsversorgungsanschluss des DP-auf-HDMI-Umwandlungschips mit einer zwölften Leistungsversorgung verbunden ist; ein zweiter Leistungsversorgungsanschluss des DP-auf-HDMI-Umwandlungschips mit einer dreizehnten Leistungsversorgung verbunden ist; ein Quarzoszillator-Eingangsanschluss des DP-auf-HDMI-Umwandlungschips mit einem ersten Anschluss des zweiten Quarzoszillators und einem ersten Anschluss des dritten Kondensators verbunden ist; ein Quarzoszillator-Ausgangsanschluss des DP-auf-HDMI-Umwandlungschips mit einem zweiten Anschluss des zweiten Quarzoszillators und einem ersten Anschluss des vierten Kondensators verbunden ist; ein erstes DP-Signal der positiven Elektrode des DP-auf-HDMI-Umwandlungschips mit einem ersten Anschluss des ersten Widerstands verbunden ist; ein erstes DP-Signal der negativen Elektrode des DP-auf-HDMI-Umwandlungschips mit einem ersten Anschluss des zweiten Widerstands verbunden ist; ein zweites DP-Signal der positiven Elektrode des DP-auf-HDMI-Umwandlungschips mit einem ersten Anschluss des dritten Widerstands verbunden ist; ein zweites DP-Signal der negativen Elektrode des DP-auf-HDMI-Umwandlungschips mit einem ersten Anschluss des vierten Widerstands verbunden ist; ein drittes DP-Signal der positiven Elektrode des DP-auf-HDMI-Umwandlungschips mit einem ersten Anschluss des fünften Widerstands verbunden ist; ein drittes DP-Signal der negativen Elektrode des DP-auf-HDMI-Umwandlungschips mit einem ersten Anschluss des sechsten Widerstands verbunden ist; ein viertes DP-Signal der positiven Elektrode des DP-auf-HDMI-Umwandlungschips mit einem ersten Anschluss des siebten Widerstands verbunden ist; ein viertes DP-Signal der negativen Elektrode des DP-auf-HDMI-Umwandlungschips mit einem ersten Anschluss des achten Widerstands verbunden ist; ein erster sekundärer Videosignalanschluss der positiven Elektrode des DP-auf-HDMI-Umwandlungschips, ein erster sekundärer Videosignalanschluss der negativen Elektrode des DP-auf-HDMI-Umwandlungschips, ein zweiter Anschluss des ersten Widerstands, ein zweiter Anschluss des zweiten Widerstands, ein zweiter Anschluss des dritten Widerstands, ein zweiter Anschluss des vierten Widerstands, ein zweiter Anschluss des fünften Widerstands, ein zweiter Anschluss des sechsten Widerstands, ein zweiter Anschluss des siebten Widerstands, und ein zweiter Anschluss des achten Widerstands gemeinsam einen DP-Signalanschluss des Videosignal-Umwandlungsmoduls (02) bilden; ein HDMI-Hotplug-Erkennungsanschluss des DP-auf-HDMI-Umwandlungschips, ein erster HDMI-Signalanschluss der positiven Elektrode des DP-auf-HDMI-Umwandlungschips, ein erster HDMI-Signalanschluss der negativen Elektrode des DP-auf-HDMI-Umwandlungschips, ein zweiter HDMI-Signalanschluss der positiven Elektrode des DP-auf-HDMI-Umwandlungschips, ein zweiter HDMI-Signalanschluss der negativen Elektrode des DP-auf-HDMI-Umwandlungschips, ein dritter HDMI-Signalanschluss der positiven Elektrode des DP-auf-HDMI-Umwandlungschips, ein dritter HDMI-Signalanschluss der negativen Elektrode des DP-auf-HDMI-Umwandlungschips, ein HDMI-Taktsignalanschluss der positiven Elektrode des DP-auf-HDMI-Umwandlungschips, ein HDMI-Taktsignalanschluss der negativen Elektrode des DP-auf-HDMI-Umwandlungschips, und ein erster Anschluss des neunten Widerstands gemeinsam einen HDMI-Signalanschluss des Videosignal-Umwandlungsmoduls (02) bilden; ein zweiter Anschluss des neunten Widerstands mit einer fünften Leistungsversorgung verbunden ist; und ein Masseanschluss des DP-auf-HDMI-Umwandlungschips mit der Leistungsmasse verbunden ist.

7. Hub, in den die mobile Leistungsversorgungsschaltung eingebaut ist, nach Anspruch 1, **dadurch gekennzeichnet, dass** die Hub-Schaltung weiter umfasst:
eine USB-Steuerung (15), die mit dem dritten Verbinder (12) verbunden ist und verwendet wird, um eine Vielzahl von zweiten USB-Signalen auf Basis eines ersten USB-Signals zu erzeugen, oder das erste USB-Signal auf Basis der Vielzahl von zweiten USB-Signalen zu erzeugen; und
eine Vielzahl von USB-Verbindern (161), die mit der USB-Steuerung (15) verbunden sind und verwendet werden, um die zweiten USB-Signale zu schalten,
wobei der dritte Verbinder (12) weiter verwendet wird, um das erste USB-Signal zu schalten.

8. Hub, in den die mobile Leistungsversorgungsschaltung eingebaut ist, nach Anspruch 7, **dadurch gekennzeichnet, dass** die USB-Steuerung (15) eine USB-Hub-Steuerung, einen dritten Quarzoszillator, einen fünften Kondensator, einen sechsten Kondensator, einen zehnten Widerstand, einen elften Widerstand, einen zwölften Widerstand, einen dreizehnten Widerstand, einen vierzehnten Widerstand, einen fünfzehnten Widerstand, und einen sechzehnten Widerstand umfasst,
wobei ein erster Leistungsversorgungsanschluss VCC33 der USB-Hub-Steuerung, ein erster Anschluss des zehnten Widerstands, und ein erster Anschluss des sechzehnten Widerstands gemeinsam mit einer sechsten Leistungsversorgung verbunden sind; ein zweiter Anschluss des sechzehnten Widerstands mit einem Leistungsversorgungs-Erkennungsanschluss der USB-Hub-Steuerung verbunden ist; ein zweiter Anschluss des zehnten Widerstands mit einem ersten Anschluss des elften Widerstands und einem externen Leistungsversorgungs-Zustandsanschluss der USB-Hub-Steuerung verbunden ist; ein zweiter Leistungsversorgungsanschluss der USB-Hub-Steuerung (15), ein erster Anschluss des zwölften Widerstands, und ein erster Anschluss des dreizehnten Widerstands gemeinsam mit einer siebten Leistungsversorgung verbunden sind; der erste Anschluss des zwölften Widerstands mit einem Leistungsversorgungs-Rückkopplungsanschluss der USB-Hub-Steuerung (15) verbunden ist; der erste Anschluss des dreizehnten Widerstands mit einem Leistungsversorgungs-Einstellanschluss der USB-Hub-Steuerung verbunden ist; ein Quarzoszillator-Eingangsanschluss der USB-Hub-Steuerung mit einem ersten Anschluss des dritten Quarzoszillators und einem ersten Anschluss des fünften Kondensators verbunden ist; ein Quarzoszillator-Ausgangsanschluss der USB-Hub-Steuerung mit einem zweiten Anschluss des dritten Quarzoszillators und einem ersten Anschluss des sechsten Kondensators verbunden ist; ein USB2.0 UFP-Signalanschluss der positiven Elektrode der USB-Hub-Steuerung, ein USB2.0 UFP-Signalanschluss der negativen Elektrode der USB-Hub-Steuerung, ein USB3.1 UFP-Signalempfangsanschluss der positiven Elektrode der USB-Hub-Steuerung, ein USB3.1 UFP-Signalempfangsanschluss der negativen Elektrode der USB-Hub-Steuerung, ein USB3.1 UFP-Signalübertragungsanschluss der positiven Elektrode der USB-Hub-Steuerung, und ein USB3.1 UFP-Signalübertragungsanschluss der negativen Elektrode der USB-Hub-Steuerung gemeinsam einen Upstream Facing-Signalanschluss der USB-Steuerung bilden; ein erster USB2.0 DFP-Signalanschluss der positiven Elektrode der USB-Hub-Steuerung, ein erster USB2.0 DFP-Signalanschluss der negativen Elektrode der USB-Hub-Steuerung, ein erster USB3.1 DFP-Signalempfangsanschluss der positiven Elektrode der USB-Hub-Steuerung, ein erster USB3.1 DFP-Signalempfangsanschluss der negativen Elektrode der USB-Hub-Steuerung, ein erster USB3.1 DFP-Signalübertragungsanschluss der positiven Elektrode der USB-Hub-Steuerung, und ein erster USB3.1 DFP-Signalübertragungsanschluss der negativen Elektrode der USB-Hub-Steuerung gemeinsam einen ersten Downstream Facing-Signalanschluss der USB-Steuerung bilden; ein zweiter USB2.0 DFP-Signalanschluss der positiven Elektrode der USB-Hub-Steuerung, ein zweiter USB2.0 DFP-Signalanschluss der negativen Elektrode der USB-Hub-Steuerung, ein zweiter USB3.1 DFP-Signalempfangsanschluss der positiven Elektrode der USB-Hub-Steuerung, ein zweiter USB3.1 DFP-Signalempfangsanschluss der negativen Elektrode der USB-Hub-Steuerung, ein zweiter USB3.1 DFP-Signalübertragungsanschluss der positiven Elektrode der USB-Hub-Steuerung, und ein zweiter USB3.1 DFP-Signalübertragungsanschluss der negativen Elektrode der USB-Hub-Steuerung gemeinsam einen zweiten Downstream Facing-Signalanschluss der USB-Steuerung bilden; ein Leistungsversorgungs-Aktivierungsanschluss der USB-Hub-Steuerung mit einem ersten Anschluss des fünfzehnten Widerstands verbunden ist; ein externer Widerstand der USB-Hub-Steuerung mit einem ersten Anschluss des vierzehnten Widerstands verbunden ist; ein zweiter Anschluss des fünften Kondensators, ein zweiter Anschluss des sechsten Kondensators, ein zweiter Anschluss des vierzehnten Widerstands, ein zweiter Anschluss des fünfzehnten Widerstands, und ein Masseanschluss der USB-Hub-Steuerung gemeinsam mit einer Leistungsmasse verbunden sind.

## Revendications

1. Concentrateur dans lequel un circuit d'alimentation électrique mobile est construit, le concentrateur étant connecté à un ordinateur portatif (001) et à un adaptateur d'alimentation (002), et dans lequel le concentrateur dans lequel le circuit d'alimentation électrique mobile est construit comprend le circuit d'alimentation électrique mobile et un circuit de concentrateur,
dans lequel le circuit d'alimentation électrique mobile comprend :
un premier connecteur (01) utilisé pour commuter une première sortie d'alimentation électrique à courant continu par l'adaptateur d'alimentation (002) ou une première alimentation électrique ;
un premier module de conversion de courant continu (02) connecté au premier connecteur (01) et utilisé pour générer une deuxième alimentation électrique à courant continu selon la première alimentation électrique à courant continu ou générer la première alimentation électrique selon une deuxième alimentation électrique ;
un module de gestion (03) de charge et de deuxième module de conversion de courant continu (04) connecté au premier module de conversion de courant continu (02) et utilisé pour allumer ou éteindre la deuxième alimentation électrique à courant continu ou la deuxième alimentation électrique ;
un deuxième module de conversion de courant continu (04) connecté au module de gestion (03) de charge et de décharge et utilisé pour générer une quatrième alimentation électrique et une alimentation électrique secondaire selon une troisième alimentation électrique,
dans lequel le module de gestion (03) de charge et de décharge est en outre utilisé pour générer la troisième alimentation électrique selon la deuxième alimentation électrique ; et
un noyau électrique (06) connecté au module de gestion (03) de charge et de décharge et utilisé pour stocker de l'énergie électrique ou fournir en sortie la deuxième alimentation électrique selon la deuxième alimentation électrique à courant continu ;
et dans lequel le circuit de concentrateur comprend :
un module de gestion d'alimentation électrique (09) connecté au deuxième module de conversion de courant continu (04) et utilisé pour allumer ou éteindre la quatrième alimentation électrique selon l'alimentation électrique secondaire et un protocole de charge ;
un deuxième connecteur (10) connecté au module de gestion d'alimentation électrique (09) et utilisé pour commuter un premier signal vidéo ;
un module de conversion de signal vidéo (11) connecté au deuxième connecteur (10) et utilisé pour générer le premier signal vidéo selon un second signal vidéo ; et
un troisième connecteur (12) connecté au module de conversion de signal vidéo (11) et à l'ordinateur portatif (001) et utilisé pour commuter le second signal vidéo et la quatrième alimentation électrique, et
dans lequel le module de gestion d'alimentation électrique (09) comprend :
un module de commande de mode (091) connecté au deuxième module de conversion de courant continu (04) et au troisième connecteur (12) et utilisé pour réaliser une communication de protocole de charge et fournir en sortie un signal de commutation selon l'alimentation électrique secondaire ; et
un module de commutation d'alimentation électrique (092) connecté au deuxième module de conversion de courant continu (04), au module de commande de mode (091) et au troisième connecteur (12) et utilisé pour allumer ou éteindre la quatrième alimentation électrique selon le signal de commutation et
**caractérisé en ce que** le module de commande de mode (091) comprend un dispositif de commande de sélection de mode et de puissance PD, un premier oscillateur à quartz, un premier condensateur et un deuxième condensateur,
dans lequel une première borne d'alimentation électrique du dispositif de commande de sélection de mode et de puissance PD est connectée à une dixième alimentation électrique ; une seconde borne d'alimentation électrique du dispositif de commande de sélection de mode et de puissance PD est connectée à une onzième alimentation électrique ; une borne d'entrée d'oscillateur à quartz du dispositif de commande de sélection de mode et de puissance PD est connectée à une première borne du premier oscillateur à quartz et à une première borne du premier condensateur ; une borne de sortie d'oscillateur à quartz du dispositif de commande de sélection de mode et de puissance PD est connectée à une seconde borne du premier oscillateur à quartz et à une première borne du deuxième condensateur ; une première borne de configuration UFP de charge du dispositif de commande de sélection de mode et de puissance PD et une seconde borne de configuration UFP de charge du dispositif de commande de sélection de mode et de puissance PD constituent conjointement une borne de configuration de port amont du module de commande de mode (091) ; une première borne de configuration DRP de charge du dispositif de commande de sélection de mode et de puissance PD et une seconde borne de configuration DRP de charge du dispositif de commande de sélection de mode et de puissance PD constituent conjointement une borne de configuration de port bivalent du module de commande de mode (091) ; une première borne d'entrée/sortie universelle du dispositif de commande de sélection de mode et de puissance PD, une deuxième borne d'entrée/sortie universelle du dispositif de commande de sélection de mode et de puissance PD, une troisième borne d'entrée/sortie universelle du dispositif de commande de sélection de mode et de puissance PD, une quatrième borne d'entrée/sortie universelle du dispositif de commande de sélection de mode et de puissance PD, une cinquième borne d'entrée/sortie universelle du dispositif de commande de sélection de mode et de puissance PD, une sixième borne d'entrée/sortie universelle du dispositif de commande de sélection de mode et de puissance PD, et une septième borne d'entrée/sortie universelle du dispositif de commande de sélection de mode et de puissance PD constituent conjointement une borne de sortie de signal de commutation du module de commande de mode (091) ; et une borne de masse du dispositif de commande de sélection de mode et de puissance PD, une seconde borne du premier condensateur, et une seconde borne du deuxième condensateur sont connectées conjointement à une masse d'alimentation.

2. Concentrateur dans lequel le circuit d'alimentation électrique mobile est construit selon la revendication 1, **caractérisé en ce que** le deuxième module de conversion de courant continu (04) comprend :
un deuxième module abaisseur-élévateur (041) connecté au module de gestion (03) de charge et de décharge et utilisé pour générer une cinquième alimentation électrique sur la base de la troisième alimentation électrique ; et
un deuxième module de conversion de tension (042) connecté au deuxième module abaisseur-élévateur et utilisé pour générer la quatrième alimentation électrique pour la cinquième alimentation électrique.

3. Concentrateur dans lequel le circuit d'alimentation électrique mobile est construit selon la revendication 1, **caractérisé en ce que** le circuit d'alimentation électrique mobile comprend en outre :
un troisième module de conversion de courant continu (13) connecté au module de gestion (03) de charge et de décharge et utilisé pour générer une septième alimentation électrique sur la base de la sixième alimentation électrique ; et
un quatrième connecteur (14) connecté au troisième module de conversion de courant continu (13) et commutant la septième alimentation électrique,
dans lequel le module de gestion (03) de charge et de décharge est en outre utilisé pour générer la sixième alimentation électrique sur la base de la deuxième alimentation électrique.

4. Concentrateur dans lequel le circuit d'alimentation électrique mobile est construit selon la revendication 5, **caractérisé en ce que** le troisième module de conversion de courant continu (13) comprend :
un troisième module abaisseur-élévateur (131) connecté au module de gestion (03) de charge et de décharge et utilisé pour générer une huitième alimentation électrique sur la base de la sixième alimentation électrique ; et
un troisième module de conversion de tension (132) connecté au troisième module abaisseur-élévateur (131) et utilisé pour générer la septième alimentation électrique sur la base de la huitième alimentation électrique.

5. Concentrateur dans lequel le circuit d'alimentation électrique mobile est construit selon la revendication 1, **caractérisé en ce que** le premier module de conversion de courant continu (02) comprend :
un premier module abaisseur-élévateur (021) connecté au module de gestion (03) de charge et de décharge et utilisé pour générer une neuvième alimentation électrique sur la base de la deuxième alimentation électrique ou générer la deuxième alimentation électrique à courant continu sur la base d'une quatrième alimentation électrique à courant continu ; et
un premier module de conversion de tension (022) connecté au premier module abaisseur-élévateur (021) et utilisé pour générer la quatrième alimentation électrique à courant continu sur la base de la première alimentation électrique à courant continu ou générer la première alimentation électrique sur la base de la neuvième alimentation électrique.

6. Concentrateur dans lequel le circuit d'alimentation électrique mobile est construit selon la revendication 1, **caractérisé en ce que** le module de conversion de signal vidéo (02) comprend une puce de conversion DP-HDMI, un deuxième oscillateur à quartz, un troisième condensateur, un quatrième condensateur, un premier résistor, un deuxième résistor, un troisième résistor, un quatrième résistor, un cinquième résistor, un sixième résistor, un septième résistor, un huitième résistor et un neuvième résistor,
dans lequel une première borne d'alimentation électrique de la puce de conversion DP-HDMI est connectée à une douzième alimentation électrique ; une seconde borne d'alimentation électrique de la puce de conversion DP-HDMI est connectée à une treizième alimentation électrique ; une borne d'entrée d'oscillateur à quartz de la puce de conversion DP-HDMI est connectée à une première borne du deuxième oscillateur à quartz et à une première borne du troisième condensateur ; une borne de sortie d'oscillateur à quartz de la puce de conversion DP-HDMI est connectée à une seconde borne du deuxième oscillateur à quartz et à une première borne du quatrième condensateur ; un premier signal DP d'électrode positive de la puce de conversion DP-HDMI est connecté à une première borne du premier résistor ; un premier signal DP d'électrode négative de la puce de conversion DP-HDMI est connecté à une première borne du deuxième résistor ; un deuxième signal DP d'électrode positive de la puce de conversion DP-HDMI est connecté à une première borne du troisième résistor ; un deuxième signal DP d'électrode négative de la puce de conversion DP-HDMI est connecté à une première borne du quatrième résistor ; un troisième signal DP d'électrode positive de la puce de conversion DP-HDMI est connecté à une première borne du cinquième résistor ; un troisième signal DP d'électrode négative de la puce de conversion DP-HDMI est connecté à une première borne du sixième résistor ; un quatrième signal DP d'électrode positive de la puce de conversion DP-HDMI est connecté à une première borne du septième résistor ; un quatrième signal DP d'électrode négative de la puce de conversion DP-HDMI est connecté à une première borne du huitième résistor ; une première borne de signal vidéo secondaire d'électrode positive de la puce de conversion DP-HDMI, une première borne de signal vidéo secondaire d'électrode négative de la puce de conversion DP-HDMI, une seconde borne du premier résistor, une seconde borne du deuxième résistor, une seconde borne du troisième résistor, une seconde borne du quatrième résistor, une seconde borne du cinquième résistor, une seconde borne du sixième résistor, une seconde borne du septième résistor, et une seconde borne du huitième résistor constituent conjointement une borne de signal DP du module de conversion de signal vidéo (02) ; une borne de détection de branchement à chaud HDMI de la puce de conversion DP-HDMI, une première borne de signal HDMI d'électrode positive de la puce de conversion DP-HDMI, une première borne de signal HDMI d'électrode négative de la puce de conversion DP-HDMI, une deuxième borne de signal HDMI d'électrode positive de la puce de conversion DP-HDMI, une deuxième borne de signal HDMI d'électrode négative de la puce de conversion DP-HDMI, une troisième borne de signal HDMI d'électrode positive de la puce de conversion DP-HDMI, une troisième borne de signal HDMI d'électrode négative de la puce de conversion DP-HDMI, une borne de signal d'horloge HDMI d'électrode positive de la puce de conversion DP-HDMI, une borne de signal d'horloge HDMI d'électrode négative de la puce de conversion DP-HDMI, et une première borne du neuvième résistor constituent conjointement une borne de signal HDMI du module de conversion de signal vidéo (02) ; une seconde borne du neuvième résistor est connectée à une cinquième alimentation électrique ; et une borne de masse de la puce de conversion DP-HDMI est connectée à la masse d'alimentation.

7. Concentrateur dans lequel le circuit d'alimentation électrique mobile est construit selon la revendication 1, **caractérisé en ce que** le circuit de concentrateur comprend en outre :
un dispositif de commande USB (15) connecté au troisième connecteur (12) et utilisé pour générer une pluralité de seconds signaux USB sur la base d'un premier signal USB ou
générer le premier signal USB sur la base de la pluralité de seconds signaux USB ; et
une pluralité de connecteurs USB (161) connectés au dispositif de commande USB (15) et utilisés pour commuter les seconds signaux USB,
dans lequel le troisième connecteur (12) est en outre utilisé pour commuter le premier signal USB.

8. Concentrateur dans lequel le circuit d'alimentation électrique mobile est construit selon la revendication 7, **caractérisé en ce que** le dispositif de commande USB (15) comprend un dispositif de commande de concentrateur USB, un troisième oscillateur à quartz, un cinquième condensateur, un sixième condensateur, un dixième résistor, un onzième résistor, un douzième résistor, un treizième résistor, un quatorzième résistor, un quinzième résistor et un seizième résistor,
dans lequel une première borne d'alimentation électrique VCC33 du dispositif de commande de concentrateur USB, une première borne du dixième résistor, et une première borne du seizième résistor sont connectées conjointement à une sixième alimentation électrique ; une seconde borne du seizième résistor est connectée à une borne de détection d'alimentation électrique du dispositif de commande de concentrateur USB ; une seconde borne du dixième résistor est connectée à une première borne du onzième résistor et à une borne d'état d'alimentation électrique externe du dispositif de commande de concentrateur USB ; une seconde borne d'alimentation électrique du dispositif de commande de concentrateur USB (15), une première borne du douzième résistor, et une première borne du treizième résistor sont connectées conjointement à une septième alimentation électrique ; la première borne du douzième résistor est connectée à une borne de rétroaction d'alimentation électrique du dispositif de commande de concentrateur USB (15) ; la première borne du treizième résistor est connectée à une borne d'ajustement d'alimentation électrique du dispositif de commande de concentrateur USB ; une borne d'entrée d'oscillateur à quartz du dispositif de commande de concentrateur USB est connectée à une première borne du troisième oscillateur à quartz et à une première borne du cinquième condensateur ; une borne de sortie d'oscillateur à quartz du dispositif de commande de concentrateur USB est connectée à une seconde borne du troisième oscillateur à quartz et à une première borne du sixième condensateur ; une borne de signal d'électrode positive UFP USB2.0 du dispositif de commande de concentrateur USB, une borne de signal d'électrode négative UFP USB2.0 du dispositif de commande de concentrateur USB, une borne de réception de signal d'électrode positive UFP USB3.1 du dispositif de commande de concentrateur USB, une borne de réception de signal d'électrode négative UFP USB3.1 du dispositif de commande de concentrateur USB, une borne de transmission de signal d'électrode positive UFP USB3.1 du dispositif de commande de concentrateur USB, et une borne de transmission de signal d'électrode négative UFP USB3.1 du dispositif de commande de concentrateur USB constituent conjointement une borne de signal amont du dispositif de commande USB ; une première borne de signal d'électrode positive DFP USB2.0 du dispositif de commande de concentrateur USB, une première borne de signal d'électrode négative DFP USB2.0 du dispositif de commande de concentrateur USB, une première borne de réception de signal d'électrode positive DFP USB3.1 du dispositif de commande de concentrateur USB, une première borne de réception de signal d'électrode négative DFP USB3.1 du dispositif de commande de concentrateur USB, une première borne de réception de signal d'électrode positive DFP USB3.1 du dispositif de commande de concentrateur USB, et une première borne de transmission de signal d'électrode négative DFP USB3.1 du dispositif de commande de concentrateur USB constituent conjointement une première borne de signal aval du dispositif de commande USB ; une seconde borne de signal d'électrode positive DFP USB2.0 du dispositif de commande de concentrateur USB, une seconde borne de signal d'électrode négative DFP USB2.0 du dispositif de commande de concentrateur USB, une seconde borne de réception de signal d'électrode positive DFP USB3.1 du dispositif de commande de concentrateur USB, une seconde borne de réception de signal d'électrode négative DFP USB3.1 du dispositif de commande de concentrateur USB, une seconde borne de transmission de signal d'électrode positive DFP USB3.1 du dispositif de commande de concentrateur USB, et une seconde borne de transmission de signal d'électrode négative DFP USB3.1 du dispositif de commande de concentrateur USB constituent conjointement une seconde borne de signal aval du dispositif de commande USB ; une borne d'activation d'alimentation électrique du dispositif de commande de concentrateur USB est connectée à une première borne du quinzième résistor ; un résistor externe du dispositif de commande de concentrateur USB est connecté à une première borne du quatorzième résistor ; une seconde borne du cinquième condensateur, une seconde borne du sixième condensateur, une seconde borne du quatorzième résistor, une seconde borne du quinzième résistor, et une borne de masse du dispositif de commande de concentrateur USB sont connectées conjointement à une masse d'alimentation.
